# EUROPÄISCHE PATENTSCHRIFT

(11) **EP 3 370 878 B1**
(45) Veröffentlichungstag und Bekanntmachung des Hinweises auf die Patenterteilung: **09.10.2019**
(21) Anmeldenummer: 16790982.9
(22) Anmeldetag: 02.11.2016
(51) Int. Cl.: B02C 18/14, B02C 18/18

(54) **WERKZEUGSYSTEM**
TOOL SYSTEM
SYSTÈME D'OUTIL

(30) Priorität: 06.11.2015 DE 102015119119
(43) Veröffentlichungstag der Anmeldung: 12.09.2018
(73) Patentinhaber: Betek GmbH & Co. KG, 78733 Aichhalden (DE)
(72) Erfinder: SMEETS, Florian, 69221 Dossenheim (DE); KRAEMER, Ulrich, 77709 Wolfach (DE)
(74) Vertreter: Herrmann, Jochen
(86) Internationale Anmeldenummer: PCT/EP2016/076399
(87) Internationale Veröffentlichungsnummer: WO 2017/076884

(56) Entgegenhaltungen:
- WO-A1-01/23708
- WO-A1-2004/069502
- WO-A2-2005/043981
- US-A1- 2011 062 266
- US-B1- 7 281 676

## Beschreibung

Die Erfindung betrifft ein Werkzeug zum Befestigen an einem Werkzeughalter einer Werkzeugmaschine zum Bearbeiten von pflanzlichen und/oder mineralischen Materialien, mit einem Werkzeugkörper, an dem ein in Werkzeugvorschubrichtung weisender Bearbeitungsansatz mit einem Schneidbereich, insbesondere mit einem Schneidelement ausgebildet ist und an dem an einer dem Werkzeughalter zugewandten Stützfläche ein Passelement zum Ineinandergreifen mit einem an dem Werkzeughalter vorgesehenen Gegenelement ausgebildet ist. Die Erfindung betrifft weiterhin ein entsprechendes Werkzeugsystem.

Werkzeugmaschinen mit derartigen Werkzeugen werden beispielsweise zum Zerkleinern von Baum- oder Strauchmaterial, zur Bodenbearbeitung von Wald- oder Ackerboden oder dergleichen Bearbeitungsaufgaben verwendet, wobei auch zum Beispiel der Straßen- und/oder Bergbau zu den Einsatzgebieten zählen kann. Hierbei treffen die Werkzeuge auf Steine oder sonstige harte Materialen pflanzlicher oder mineralischer Natur, so dass sie einem erheblichen Verschleiß ausgesetzt sind. Da der Verschleiß der Werkzeuge für gewöhnlich den der übrigen außenliegenden Maschinenteile bei Weitem übersteigt, werden die Werkzeuge üblicherweise austauschbar an der Maschine mittels Werkzeughaltern befestigt. Dabei sind die Werkzeughalter beispielsweise an einem rotierenden oder auch einem translatorisch beweglichen Element der Werkzeugmaschine angebracht oder in diesem oder direkt an der Werkzeugmaschine integriert. Ist ein Werkzeug verschlissen, wird es zunächst aus dem Werkzeughalter gelöst und anschließend das neue Werkzeug montiert. Zu beachten ist dabei, dass stets ein für die Bearbeitungsaufgabe bzw. Maschine geeignetes Werkzeug verwendet wird. Der Einsatz eines ungeeigneten Werkzeuges kann zu einer Verkürzung des Werkzeug-Wechselinterwalls führen, was sich gegebenenfalls ungünstig auf die Betriebskosten auswirkt. Weiterhin könnte ein für die Belastung nicht ausgelegtes Werkzeug im Betrieb zerstört werden und dabei etwa durch abspritzende Teile ein hohes Sicherheits- und Beschädigungsrisiko darstellen.

Um die Verwendung eines geeigneten Werkzeugs an einer entsprechenden Werkzeugmaschine zu unterstützen ist es zweckmäßig, das Werkzeug und den Werkzeughalter durch eine entsprechende Schnittstelle individuell aufeinander abzustimmen. So ist beispielsweise in der DE102013110289 A1 ein Schneidwerkzeug mit einem Befestigungsabschnitt in Form einer Acht offenbart, der sich über die Stützfläche des Schneidwerkzeugs erhebt. An dem Werkzeughalter ist an einer Gegenfläche eine korrespondierende Aufnahme vorgesehen, in die der Befestigungsabschnitt bei Montage definiert eingreift.

Eine andere Druckschrift WO2004069502 offenbart ein Werkzeug zum Befestigen an einem Werkzeughalter in einer Werkzeugmaschine zum Bearbeiten von pflanzlichen und/oder mineralischen Materialien.

Es ist Aufgabe der Erfindung, ein Werkzeug bzw. ein Werkzeugsystem der eingangs erwähnten Art bereitzustellen, mit dem eine zugesicherte Zuverlässigkeit und Betriebssicherheit bei einer verwendeten Werkzeugmaschine gewährleistet werden kann.

Diese Aufgabe wird gemäß dem Anspruch 1 gelöst, wonach das Passelement über seinen Höhenverlauf bezüglich der Stützfläche zumindest zwei Formbereiche mit voneinander unterschiedlichen Konturbereichen aufweist. Als Konturbereich wird in diesem Zusammenhang je eine Fläche bezeichnet, wie sie von dem in Draufsicht (d.h. in Höhenrichtung) auf das Passelement ersichtlichen Außenumriss, d.h. der Kontur, des jeweiligen Formbereiches umschlossen wird. Auch geometrisch ähnliche Konturbereiche gelten hierbei als unterschiedlich, zum Beispiel wenn die Flächen eine gleiche Form aufweisen, eine der Flächen jedoch kleiner ausgebildet als die andere (beispielsweise ein kleineres auf einem größeren Quadrat). Durch die erfindungsgemäße Lösung lässt sich eine definierte Kodierung bezüglich einer Schnittstelle zwischen dem Werkzeug dem Werkzeughalter gestalten. Dabei wird vorteilhaft neben den Dimensionsrichtungen in einer Ebene parallel zur Stützfläche zusätzlich die Dimension in den Höhen- bzw. Tiefenrichtungen, senkrecht zur Stützfläche, genutzt. So lassen sich auch bei einer Vielzahl von unterschiedlichen Werkzeugen definierte Schnittstellen zu korrespondierenden Werkzeughaltern vorsehen, so dass die Verwendung eines geeigneten Werkzeugs an der jeweiligen Werkzeugmaschine sichergestellt werden kann. Der Werkzeughalter kann dabei lösbar oder unlösbar an der Maschine befestigt sein. An einer Werkzeug-/ Werkzeughalterpaarung können auch mehrere solcher Pass- und entsprechender Gegenelemente vorgesehen sein.

Weiterhin wird die Aufgabe mit einem Werkzeugsystem gemäß dem Anspruch 18 mit einem Werkzeug gemäß mindestens einem der Ansprüche 1-17 und einem Werkzeughalter einer Werkzeugmaschine zum Bearbeiten von pflanzlichen und/oder mineralischen Materialien gelöst.

In einer vorteilhaften Ausgestaltungsvariante der Erfindung sind das Passelement und das Gegenelement am Werkzeughalter zueinander komplementär zur Bildung einer form- und/oder kraftschlüssigen Verbindung ausgebildet. So können beispielsweise auf das Werkzeug wirkende Quer-Kräfte über das Passelement auf den Werkzeughalter abgetragen werden. Auf diese Weise lassen sich das Pass- und das Gegenelement vorteilhaft in ein bestimmtes Konzept zur Kräfteabtragung zwischen Werkzeug und Werkzeughalter integrieren.

Wenn das Passelement als Ansatz und das Gegenelement als Eintiefung ausgebildet ist, kann dadurch beispielsweise eine verbesserte Führung eines durch das Passelement in das Werkzeug geführten Befestigungsmittels erreicht werden.

Jedoch kann auch das Passelement als Eintiefung und das Gegenelement als Ansatz ausgebildet sein, was in gewissen Einbausituationen ebenfalls vorteilhaft sein kann. Auch können bei mehreren Pass- und Gegenelementen unterschiedliche Ausbildungen diesbezüglich vorgesehen sein.

Für eine einfache Montage des Werkzeugs auf den Werkzeughalter ist es vorteilhaft, wenn bei Draufsicht auf das Passelement die Kontur eines zweiten, weiter von der Stützfläche beabstandeten Formbereichs innerhalb oder zumindest bereichsweise auf der Kontur eines ersten, näher an der Stützfläche gelegenen Formbereichs liegt. Dies gilt entsprechend für eventuelle weitere Formbereiche, die weiter beabstandet von der Stützfläche liegen, bezüglich ihrer angrenzenden, näher an der Stützfläche gelegenen Formbereiche.

In einer weiteren bevorzugten Ausgestaltungsvariante sind die Formbereiche über den Höhenverlauf des Passelements über Plateauflächen mit vorzugsweise im Wesentlichen rechtwinkliger Ausrichtung zum Höhenverlauf abgeschlossen und/oder gehen über derartige Plateauflächen in den nächsten Formbereich über. "Im Wesentlichen" bedeutet in diesem Zusammenhang, dass die Richtungskomponente des Flächenverlaufs der Plateauflächen rechtwinklig zum Höhenverlauf größer ist als die Richtungskomponente in Richtung des Höhenverlaufes. Auf diese Weise ergibt sich im Vertikalschnitt des Passelements eine Kontur, die zumindest bereichsweise in Höhenrichtung im Wesentlichen gestuft in Richtung dessen Längsmittelachse verläuft. So lassen sich definierte Höhen der Formbereiche und gegebenenfalls ein definierter Übergang zu dem jeweiligen nächsten Formbereich erhalten, was für eine definierte Abstützung vorteilhaft sein kann.

Wenn die Formbereiche unterschiedliche Höhen aufweisen, erlaubt dies eine definierte Auslegung einer gegebenenfalls vorzusehenden Abstützung über Randflächen des Passelements an korrespondierenden Rand-Gegenflächen des Gegenelements. Die Höhen definieren die jeweiligen Ausdehnungen der Formbereiche in Höhenrichtung und somit deren Dicke. Ein Formbereich ist somit ein dreidimensionaler Bereich, dessen äußerer Umfang im Wesentlichen über seine Höhe und, bezüglich seiner Flächenausdehnung bevorzugt rechtwinklig zum Höhenverlauf des Passelements, über seinen Konturbereich definiert ist.

Um eine definierte Abstützung zu erreichen ist es weiterhin vorteilhaft, wenn die Formbereiche über ihre Höhen von Randflächen eingefasst sind, die zum Höhenverlauf des Passelements zumindest bereichsweise parallel und/oder konisch gegen die Plateaufläche des jeweiligen Passelements zulaufend ausgerichtet sind. Weiterhin können die Randflächen über die jeweiligen Höhen auch schräge und/oder gerundete Bereiche aufweisen, so dass über die Höhe unterschiedlich geformte Bereiche vorgesehen sein können. Sind schräge und/oder gerundete Bereiche z.B. in Übergangsbereichen vorgesehen, kann dies zusätzliche Vorteile für eine einfache Montage bringen.

Wenn die Kontur der Formbereiche zumindest bereichsweise polygonal und/oder gebogen ausgebildet ist, ermöglicht dies vielfältige Gestaltungsmöglichkeiten der Formbereiche auch hinsichtlich ihrer Funktion bei der Aufnahme und Abtragung von unterschiedlichen Kraftkomponenten.

Vorteilhaft können die Konturbereiche der Formbereiche jeweils symmetrisch und/oder zueinander geometrisch ähnlich ausgebildet sein. "Geometrisch ähnlich" bedeutet in diesem Zusammenhang, dass sich die Konturbereiche durch Streckung bzw. Stauchung und/oder Kongruenzabbildungen, d.h. Verschiebungen, Drehungen und/oder Spiegelungen, ineinander überführen lassen. Die Überführung bezieht sich dabei auf Raumrichtungen rechtwinklig zum Höhenverlauf des Passelements, die beispielsweise als y- und z-Richtung bezeichnet werden.

Weitere vorteilhafte Kodierungsmöglichkeiten ergeben sich, wenn die Konturbereiche bezüglich ihnen zugeordneter Bezugspunkte zueinander um eine parallel zur Höhenrichtung verlaufende Drehachse um einen Winkel verdreht und/oder in einer rechtwinklig zum Höhenverlauf gerichteten Richtung versetzt zueinander angeordnet sind. Als Bezugspunkte sind dabei z.B. Bezugsachsen, Symmetrieachsen, aber auch z.B. Spiegelachsen oder andere definierbare Achsen, und/oder Flächenschwerpunkte definiert sein. Der Versatz kann dabei z.B. entlang einer definierten Achse erfolgen, beispielsweise könnte der Flächenschwerpunkt eines zweiten Konturbereichs gegenüber dem eines ersten Konturbereich entlang der Symmetrieachse um einen definierten Weg verschoben sein. Es könnten aber auch einzelne Punkte, z.B. Eckpunkte, als Bezugspunkte definiert sein. Die Drehachse ist vorteilhaft durch eine gemeinsame Flächenschwerpunktachse gebildet, d.h. durch eine Achse, die parallel zur Höhenrichtung durch übereinanderliegende Flächenschwerpunkten der Formbereiche führt. Aber auch eine Drehachse durch andere definierbare Punkte ist möglich.

In einer weiteren vorteilhaften Ausgestaltungsvariante verläuft durch das Passelement eine Bohrung zur Aufnahme eines Befestigungsmittels, deren Längsachse insbesondere in Richtung des Höhenverlaufs ausgerichtet. Das Befestigungsmittel kann dabei beispielsweise eine Schraube, eine Spannhülse eine Rasterelement oder dergleichen sein. So kann das Befestigungsmittel eine zusätzliche vorteilhafte Führung erhalten. Wenn die Längsachse in Richtung des Höhenverlaufs des Passelements ausgerichtet ist, kann vorteilhaft zu einer gleichmäßigen Abstützung des Werkzeugs an den Werkzeughalter beitragen. Wenn zudem eine Ausnehmung von außen zu dem Bereich zwischen dem Passelement und den Gegenelement geführt ist, kann dies für eine einfache Montage bzw. Demontage von Vorteil sein. Die Ausnehmung ist dabei vorzugsweise kanalartig, zum Beispiel als Bohrung ausgeführt und kann durch das Passelement und/oder das Gegenelement geführt sein. Für die Demontage kann beispielsweise ein Fluid, insbesondere mit hohem Druck, in die Ausnehmung eingebracht werden. Dabei kann vorteilhaft ein Einlass und/oder Befestigungsansatz für eine Fluidleitung an dem zur Außenseite hin weisenden Ende der Ausnehmung vorgesehen sein. Zudem ist es auch denkbar, dass die Ausnehmung als Revisionsbohrung dient. Zu diesem Zweck kann in die Ausnehmung ein Verschleißschutz-Sensor eingebracht werden, um insbesondere den Verschleiß des Werkzeugs, oder auch dessen unplanmäßigen Verlust, zu überwachen.

Durch die Ausnehmung ist beispielsweise ein Fluid einleitbar, das beispielsweise Druckluft oder auch Wasser sein kann. Dieses kann bei der Demontage eingebracht werden, wodurch das Werkzeug von dem Werkzeughalter schnell und gegebenenfalls ohne weitere Hilfskraft getrennt werden kann.

In diesem Zusammenhang kann es weiterhin von Vorteil sein, wenn die Eintiefung gegenüber dem Ansatz einen Rücksprungbereich zur Bildung eines Fluidkanals zwischen dem Ansatz und der Eintiefung aufweist, der durch die Ausnehmung zugänglich ist. Durch den Fluidkanal kann die Wirkfläche zwischen dem Passelement und den Gegenelement bei Einbringung des Fluids vergrößert werden, was die Demontage zusätzlich erleichtern kann.

Weiterhin kann die Ausnehmung vorteilhaft ausgestaltet sein, um ein Demontageelement aufzunehmen, oder in der Ausnehmung kann ein Demontageelement angeordnet sein. Als Demontageelement ist beispielsweise eine Gewindeschraube oder ein Gewindestift denkbar, welche in die als Gewindebohrung in dem Werkzeug ausgestaltete Ausnehmung einschraubbar ist und die sich beim Einschrauben auf der Oberfläche des Werkzeughalters abstützt. Durch die dadurch erreichte Kraftaufbringung entgegengesetzt zum Werkzeughalter lässt sich eine Trennung des Werkzeugs von Werkzeughalter erreichen.

Auch kann zusätzlich durch die Ausnehmung ein Befestigungselement zur Verbindung des Werkzeugs mit dem Werkzeughalter einbringbar sein. Dadurch kann eine, gegebenenfalls weitere, lösbare oder auch unlösbare Verbindung zwischen dem Werkzeug und den Werkzeughalter gebildet werden. Als Befestigungselement kann dabei beispielsweise ein Gewindeelement, eine seitlich in die Ausnehmung eingeführte Spannhülse und/oder ein Rasterelement dienen.

Eine zusätzliche Flexibilität bei der Montageposition des Werkzeugs bezüglich des Werkzeughalters ist dadurch erreichbar, dass zwischen miteinander in Kontakt stehenden Oberflächen des Werkzeugs und des Werkzeughalters ein Zwischenelement, insbesondere ein plattenförmiges Element, angeordnet ist. Ist ein Zwischenelement zwischen Oberflächen angeordnet, stehen die betreffenden Oberflächen miteinander in mittelbarem Kontakt. Durch das Zwischenelement kann eine Abstandsänderung des Werkzeugs mit Bezug auf den Werkzeughalter vorgesehen werden. Zusätzlich kann das Zwischenelement ebenfalls mit Kodierungselementen, wie Ansätze und/oder Eintiefungen, versehen sein, die zu Kodierungselementen auf den betreffenden Oberflächen korrespondieren. Auf diese Weise lässt sich eine durchgängige Kodierung des gesamten Werkzeugsystems, in diesem Falle bestehend aus Werkzeug, Zwischenelement und Werkzeughalter, realisieren.

In einer vorteilhaften Ausgestaltungsvariante ist vorgesehen, dass zwischen miteinander in Kontakt stehenden Oberflächen des Werkzeugs und des Werkzeughalters ein Spannelement angeordnet ist. Als Spannelement kann dabei beispielsweise eine Tellerfeder oder dergleichen verwendet werden. Dadurch lässt sich während der Montage des Werkzeugs auf dem Werkzeughalter eine Vorspannung erzeugen, die während der Demontage des Werkzeugs von dem Werkzeughalter die Trennung begünstigt oder bewirkt.

Vorteilhaft kann vorgesehen sein, dass die im montierten Zustand miteinander in Kontakt stehenden Oberflächen von Werkzeug und Werkzeughalter eine oder mehrere Ausnehmung/en und/oder Erhebung/en aufweisen. Dabei können die Ausnehmungen beispielsweise als Eingriff bzw. Untergriff eines Demontagewerkzeuges vorgesehen sein, um Werkzeug und Werkzeughalter zu trennen. Die Erhebungen können unterschiedliche Formgebungen aufweisen. Weiterhin können diese Ausnehmungen/Erhebungen auch als zusätzliche Kodierungselemente verwendet werden und/oder als Positionierungshilfe dienen. Als Erhebung kann dabei auch ein nachträglich in das Werkzeug bzw. den Werkzeughalter eingebrachtes Formteil, beispielsweise ein Passstift, mit korrespondierenden Ausnehmungen zählen.

Nachfolgend wird die Erfindung anhand von Ausführungsbeispielen unter Bezugnahme auf die Zeichnungen näher erläutert. Es zeigen:
- Fig. 1: in perspektivischer Ansicht von schräg unten ein Werkzeugsystem mit einem Werkzeug und Werkzeughalter,
- Fig. 2: das montierte Werkzeugsystem gemäß Fig. 1 im Vertikalschnitt,
- Fig. 3: das demontierte Werkzeug gemäß Fig. 1 in perspektivischer Ansicht von schräg oben,
- Fig. 4: das demontierte Werkzeug gemäß Fig. 1 in Ansicht von oben,
- Fig. 5: das demontierte Werkzeug gemäß Fig. 1 in Ansicht von hinten, in Draufsicht auf ein Passelement,
- Fig. 6: den demontierten Werkzeughalter gemäß Fig. 1 in perspektivische Ansicht von schräg unten,
- Fig. 7: den demontierten Werkzeughalter gemäß Fig. 1 in seitlicher Ansicht im Teilschnitt,
- Fig. 8: den demontierten Werkzeughalter gemäß Fig. 1 in Ansicht von vorne, in Draufsicht auf ein Gegenelement,
- Fig. 9: eine weitere Ausführungsvariante eines Werkzeugs im Vertikalschnitt,
- Fig. 10: das Werkzeug gemäß Fig. 9 in Ansicht von oben, in Draufsicht auf ein Passelement,
- Fig. 11: eine weitere Ausführungsvariante eines montierten Werkzeugsystems im Vertikalschnitt und
- Fig. 12A,B: eine weitere Ausführungsvariante eines demontierten Werkzeugsystems mit einem Werkzeug (Fig. 12 A) und einem Werkzeughalter (Fig. 12 B) in perspektivischer Ansicht.

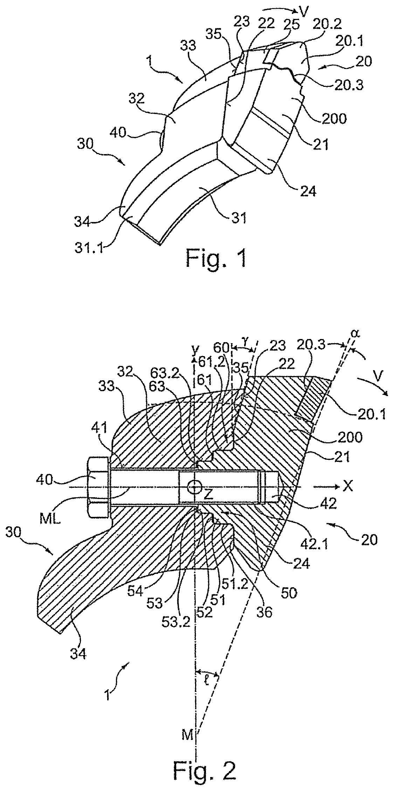

Fig. 1 zeigt ein Werkzeugsystem 1 mit einem Werkzeug 20, das an einem Werkzeughalter 30 lösbar befestigt ist. Das Werkzeug 20 umfasst einen Werkzeugkörper 200, an dem an einem Kopfbereich 25, in Verlängerung einer in eine Werkzeugvorschubrichtung V weisenden Vorderseite 21, ein Bearbeitungsansatz mit einem Schneidelement 20.1 ausgebildet ist. Das Schneidelement 20.1 ist an dem Werkzeugkörper 200 in einer dafür vorgesehenen Schneidelement-Aufnahme 20.3 befestigt, insbesondere eingelötet, und weist an seinem nach oben, von dem Werkzeugkörper 200 abgewandten und in Vorschubrichtung V weisenden Ende einen zulaufenden und gerundet ausgebildet Endbereich 20.2 auf. Das Schneidelement 20.1 ist aus einem hartmetallischen Werkstoff gefertigt, so dass es insbesondere für die Bearbeitung von widerstandsfähigen pflanzlichen und/oder mineralischen Materialien geeignet ist. Auf der dem Kopfbereich 25 gegenüberliegenden Seite weist der Werkzeugkörper 200 einen Vorsprung 24 auf, der sich über eine Stützfläche 22 hinaus erstreckt. Die Stützfläche 22 und eine gegenüber dieser in Vorschubrichtung V geneigte Anlagefläche 23 bilden Oberflächen des Werkzeugs 20, die mit dem Werkzeughalter 30 in Kontakt stehen.

Der Werkzeughalter 30 weist einen Werkzeughalterkörper 32 auf, an dessen Oberseite ein Außenbereich 33 angeformt ist. Der Außenbereich 33 steht mit einer in Werkzeugvorschubrichtung V weisenden Anlagegegenfläche 35 mit dem Kopfbereich 25 in Kontakt. Dabei ist der Außenbereich 33 als eine Art Verlängerung des Kopfbereiches 25 ausgebildet, wobei die von dem Werkzeughalterkörper 32 abweisende Kontur des Außenbereichs 33 bogenartig nach hinten ausläuft. Auf einer dem Außenbereich 33 gegenüberliegenden Seite des Werkzeughalterkörpers 32 ist ein Innenbereich 34 mit einem Werkzeughalter-Befestigungsbereich 31 zur Befestigung an einem rotierenden Element einer Werkzeugmaschine, beispielsweise einem Walzenkörper, vorgesehen. Entsprechend weist der Innenbereich 34 nach unten, in Richtung rotierendem Element weisend, eine dem rotierenden Element angepasste, bogenförmige Kontur auf. Denkbar wäre auch eine Ausführungsform, in der der Werkzeughalter 30 in einer Einbuchtung des rotierenden oder auch eines translatorisch beweglichen Elements der Werkzeugmaschine aufgenommen ist, oder dass der Werkzeughalter 30 bereits in der Maschine integriert ist. Der Werkzeughalter-Befestigungsbereich 31 weist nach innen weisende Abschrägungen 31.1 auf, die einen Schweißbereich zur stoffschlüssigen Befestigung des Werkzeugsystems 1 an der Werkzeugmaschine bilden. Der Schweißbereich, der in Vorschubrichtung V gelegen ist, ist durch den über ihn überstehenden Vorsprung 24 geschützt. Für eine verbesserte Haltbarkeit und Abstützung des Werkzeugsystems 1 auf der Werkzeugmaschine ist der Innenbereich 34 gegenüber dem restlichen Werkzeughalterkörper 32 nach hinten entgegen der Vorschubrichtung V verlängert. Auf der der Vorschubrichtung V abgewandten Rückseite des Werkzeughalters 30 ist der Kopf eines Befestigungsmittels 40, hier einer Schraube, erkennbar. Das Befestigungsmittel 40 ist mittels einer Durchführung 41 durch den Werkzeughalter 30 in eine in dem Werkzeug 20 vorgesehene Bohrung 42 geführt (s. Fig. 2). Die Bohrung 42 ist als Gewindebohrung mit einem Gewinde 42.1 ausgeführt, so dass das Befestigungsmittel 40 das Werkzeug 20 mit der Stützfläche 22 auf eine Gegenfläche 36 des Werkzeughalters 30 zur Bildung einer form- und/oder kraftschlüssigen Verbindung zieht. Auch andere Formen von Befestigungsmitteln 40 sind denkbar, beispielsweise ein oder mehrere Klemm-, Spann-, oder Rastelemente, wobei auch eine durchgehende Bohrung 42 denkbar wäre.

Fig. 2 zeigt das Werkzeugsystem 1 im Vertikalschnitt. Das Werkzeugsystem 1 ist dabei so ausgerichtet, dass das Befestigungsmittel 40 mit seiner Längsachse entlang einer horizontalen x-Achse verläuft. Eine entsprechend senkrecht zur x-Achse ausgerichtete y-Achse verläuft durch einen Mittelpunkt M eines Rotationskreises, auf dem das Werkzeugsystem 1 im Betrieb rotiert. Eine z-Achse ist senkrecht zur Bildebene ausgerichtet. Die Werkzeugvorschubrichtung V entspricht der Rotationsrichtung des Werkzeugsystems 1.

Wie Fig. 2 erkennen lässt, liegt der Endbereich 20.2 des Schneidelements 20.1 auf einer Sehne durch den Mittelpunkt M, die bezüglich der y-Achse um einen Winkel ϕ gedreht ist, wobei ϕ zwischen -45° und +80°, insbesondere zwischen 5° und 30°, zum Beispiel 21° betragen kann. Bezüglich dieser Sehne ist die in Vorschubrichtung V weisende Frontfläche des Schneidelements 20.1 um einen Winkel α geneigt, mit α zwischen -45° und +75 °, insbesondere zwischen 0° und 10°, beispielsweise 4°. Wie Fig. 2 weiter erkennen lässt, ist die Stützfläche 22 parallel zu der durch die y- und z-Achse aufgespannte y-z-Ebene ausgerichtet ist. Gegenüber der Stützfläche 22 ist die Anlagefläche 23 um einen Winkel γ (mit γ zwischen -90° und +90°, insbesondere zwischen 5° und 45°) geneigt. Eine derartige Ausrichtung der beiden Flächen zueinander ist insbesondere einer vereinfachten Montage zuträglich, da die geneigte Anlagefläche 23 das Werkzeug 20 beim Einsetzen in den Werkzeughalter 30 in die richtige Montageposition führt. Weiterhin wird vorteilhaft eine Verspannung und eine Verdrehsicherung insbesondere bei Seitenmomenten erreicht.

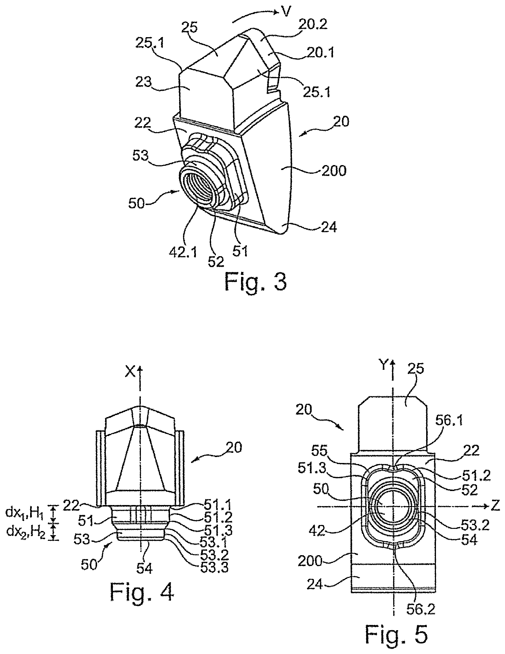

Über die Stützfläche 22, entgegen der Vorschubrichtung V, erstreckt sich ein Passelement 50 des Werkzeugs 20 in ein korrespondierendes Gegenelement 60 des Werkzeughalters 30. Das Passelement 50 ist beispielsweise, wie in dem Ausführungsbeispiel gezeigt, als Ansatz und das Gegenelement 60 als Eintiefung ausgebildet. Die Höhenrichtung des Passelements 50, in dessen Richtung seine Mittellängsachse ML ausgerichtet ist, bildet die x-Achse, wobei die betragsmäßige Höhe H (H = H₁ + H₂, s. Fig. 4) des Passelements 50 ausgehend von der Stützfläche 22 entgegen der x-Richtung zunimmt. Die Höhenrichtung des Passelements 50 verläuft somit senkrecht zur Stützfläche 22. Über seinen Höhenverlauf, entgegen der x-Richtung, weist das Passelement 50 zwei Formbereiche 51, 53 auf, die jeweils von Plateauflächen 52, 54 abgeschlossen sind. Entsprechend weist das Gegenelement 60 zwei korrespondierende Gegenformbereiche 61, 63 auf, die in ihrem Höhenverlauf durch Plateau-Gegenflächen 62, 64 abgeschlossen sind. Das Passelement 50 und das Gegenelement 60 sind derart dimensioniert, dass sich Randflächen 51.2, 53.2 des Passelements 50 form- und/oder kraftschlüssig an korrespondierenden Rand-Gegenflächen 61.2, 63.2 abstützen. Die Plateauflächen 52, 54 stehen jedoch nicht in Kontakt mit den Plateau-Gegenflächen 62, 64. Das Passelement 50 und das Gegenelement 60 tragen so zur form- und/-oder kraftschlüssigen Verbindung zwischen dem Werkzeug 20 und den Werkzeughalter 30 bei. Insbesondere können bei Beanspruchung des Werkzeugs 20 durch Scherkräfte diese über die Randflächen 51.2, 53.2 auf den Werkzeughalter 30 abgetragen werden. Die Auslegung des Passelements 50 gegenüber dem Gegenelement 60 könnte auch derart gestaltet sein, dass auch die Plateauflächen 52, 54 mit den Plateau-Gegenflächen 62, 64 in Kontakt stehen. Auch könnten Zwischenelemente zwischen den Plateauflächen 52, 54 und den Plateau-Gegenflächen 62, 64 vorgesehen sein. Die Ausgestaltung des Passelements 50 bzw. des Gegenelementes 60 wird anhand der nachfolgenden Figuren genauer beschrieben.

In Fig. 3 ist das demontierte Werkzeug 20 in perspektivische Ansicht von oben dargestellt. Die Darstellung lässt erkennen, dass die seitlichen Flächen des Kopfbereichs 25 gegenüber den seitlichen Flächen des übrigen Werkzeugkörpers 200 nach innen versetzt ausgeführt sind. Ferner sind Schrägflächen 25.1 erkennbar, die sich nach vorne, in Richtung Schneidelement 20.1 verlaufend, verbreitern und in den zulaufenden Endbereich 20.2 des Schneidelements 20.1 übergehen. Diese Form begünstigt bei der Bearbeitung zunächst ein vereinfachtes Eindringen des Bearbeitungsansatzes mit dem Schneidelement 20.1 in das zu bearbeitende Material. Beim weiteren Eindringen des Werkzeugs 20 in das zu bearbeitende Material vergrößert sich die Zerteilungswirkung durch den entgegen der Vorschubrichtung V größer werdenden Querschnitt des Kopfbereiches 25.

Weiterhin zeigt Fig. 3 das Passelement 50 mit seinen beiden Formbereichen 51, 53, das sich über die Stützfläche 22 entgegen der Vorschubrichtung V erstreckt.

Fig. 4 verdeutlicht die Ausgestaltung des Passelements 50 in Ansicht von oben über seinen Höhenverlauf, bezüglich der x-Richtung. Ausgehend von der Stützfläche 22 geht das Passelement 50 zunächst über einen als Rundung ausgebildeten ersten Übergangsbereich 51.1 des Passelements 50 in den ersten Formbereich 51 über, der sich über einen ersten Höhenbereich dx₁ erstreckt. Eine erste Randfläche 51.2, die den ersten Formbereich 51 in Höhenrichtung x weitgehend umschließt, verläuft parallel zur x-Richtung. Über eine erste Phase 51.3 geht der erste Formbereich 51 bereichsweise in die erste Plateaufläche 52 (siehe Fig. 5) über, die vorzugsweise im Wesentlichen rechtwinklig zur x-Achse ausgerichtet ist und den Formbereich 51 in seiner Höhe abschließt. In fortschreitender Höhe des Passelements 50 geht die Plateaufläche 52 zumindest teilweise in einen zweiten Übergangsbereich 53.1 über. In den beispielsweise seitlichen Bereichen des Passelements 50, wie er aus Fig. 4 ersichtlich ist, geht die Phase 51.3 unmittelbar, ohne die zwischenliegende Plateaufläche 52, über den zweiten Übergangsbereich 53.1 in den zweiten Formbereich 53 über. Der zweite Formbereich 53 erstreckt sich über einen zweiten Höhenbereich dx₂ und ist in Höhenrichtung x weitgehend von einer zweiten Randflächen 53.2 umschlossen. Eine zweite Phase 53.3 bildet den Übergang in die zweite Plateaufläche 54, die den Formbereich 53 in seiner Höhe und auch das Passelement 50 in seiner Gesamthöhe abschließt. Das Passelement 50 erstreckt sich somit in seiner Gesamthöhe von der Stützfläche 22 bis zu der Plateauflächen 54 und ergibt sich aus der Summe der Höhen der einzelnen Formbereiche 51, 53 deren Höhe jeweils H₁ (Formbereich 51) bzw. H₂ (Formbereich 53) beträgt. Die Höhe H₁ ist dabei betragsmäßig größer als die Höhe H₂, wobei auch gleiche Höhen oder ein umgekehrtes Höhenverhältnis denkbar wäre. Insgesamt ergibt sich so eine stufenartige Ausgestaltung des Passelements 50 über dessen Höhe.

In der in Fig. 5 gezeigten Ansicht des Werkzeugs 20 von hinten, in Draufsicht auf das Passelement 50, sind die durch die jeweiligen Randflächen 51.2 bzw. 53.2 gebildeten Außenumrisse der Formbereiche 51, 53 in y-z-Richtung, rechtwinklig zur x-Richtung, erkennbar. Die Außenumrisse bilden jeweils die Kontur in y-z-Richtung und umreißen die Flächen der Formbereiche 51, 53 bezüglich der y-z-Richtung, die hier als Konturbereiche bezeichnet sind. Der Konturbereich des Formbereichs 51 ist im Wesentlichen als eine Art Rechteck mit abgerundeten Eckbereichen 55 und einer in Richtung Kopfbereich 25 weisenden ein Einbuchtung 56.1 sowie einer nach unten weisenden Auswölbung 56.2 symmetrisch ausgebildet. Der Konturbereich des Formbereichs 53 ist leicht oval ausgebildet und liegt in Draufsicht, bezüglich seiner y-z-Position, innerhalb des Außenumrisses bzw. der Kontur des Formbereichs 51.

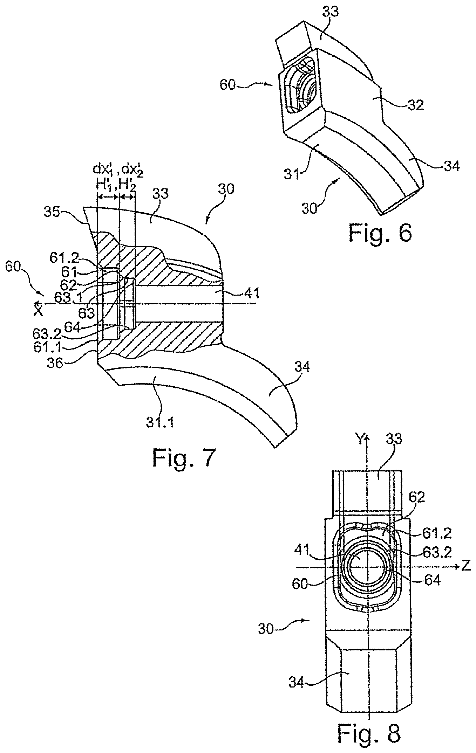

Die Figuren 6, 7 und 8 zeigen den demontierten Werkzeughalter gemäß Fig. 1. In Fig. 6 ist der Werkzeughalter 30 in perspektivischer Ansicht von unten dargestellt, wobei das Gegenelement 60 in seiner dreidimensionalen Erscheinung erkennbar ist.

Fig. 7 zeigt den Werkzeughalter 30 in seitlicher Ansicht, wobei der Teilschnittbereich den Höhenverlauf des Gegenelements 60 erkennen lässt. Ausgehend von der Gegenfläche 36 geht das Gegenelement 60 über eine erste Phase 61.1 in den ersten Gegenformbereich 61 über. Der Gegenformbereich 61 ist in einem Höhenbereich dx₁' gelegen, innerhalb dessen er weitgehend von einer ersten Rand-Gegenfläche 61.2 umschlossen ist. Die Rand-Gegenfläche 61.2 ist dabei parallel zur x-Richtung ausgerichtet. Über eine Rundung geht die Rand-Gegenfläche 61.2 in die erste Plateau-Gegenfläche 62 über, die rechtwinklig zur x-Richtung ausgerichtet ist und den ersten Gegenformbereich 61 in seiner Höhe abschließt. Über eine zweite Phase 63.1 geht das Gegenelement 60 nun in den zweiten Gegenformbereich 63 über, der in einem sich an den ersten Höhenbereich dx₁' anschließenden Höhenbereich dx₂' gelegen ist. Über seinen Höhenverlauf ist der zweite Gegenformbereich 63 weitgehend von einer parallel zur x-Richtung ausgerichteten zweiten Rand-Gegenfläche 63.2 umrissen. Über eine weitere Rundung geht die Rand-Gegenfläche 63.2 in die zweite Plateau-Gegenfläche 64 über. Diese ist rechtwinklig zur x-Richtung ausgerichtet und schließt den zweiten Gegenformbereich 63 in seinem Höhenbereich ab. Die Gesamthöhe des Gegenelements 60 reicht damit von der Gegenfläche 36 zur Plateau-Gegenfläche 64 und beträgt die Summe aus einer Höhe H₁' des erste Gegenformbereichs 61 und einer Höhe H₂' des zweiten Gegenformbereichs 63.

Da, wie in Fig. 2 gezeigt, die Plateauflächen 52, 54 nicht in Kontakt mit den Plateaudie Gegenflächen 62, 64 treten, sind die Höhen H₁' bzw. H2' der Gegenformbereiche 61, 63 größer als die Höhen H₁ bzw. H2 der korrespondierenden Formbereiche 51, 53.

Fig. 8 lässt die durch die Rand-Gegenflächen 61.2, 63.2 gebildeten Außenumrisse der Gegenformbereiche 61, 63 erkennen, die Konturbereiche umreißen. Die Konturbereiche entsprechen in ihrer Formgebung den Konturbereichen des Passelements 50 und sind lediglich der Art vergrößert, dass das Passelement 50 mit seinen Randflächen 51.2, 51.2 in Kontakt stehend zu den Rand-Gegenflächen 61.2, 63.2 in das Gegenelement 60 eingesetzt werden kann.

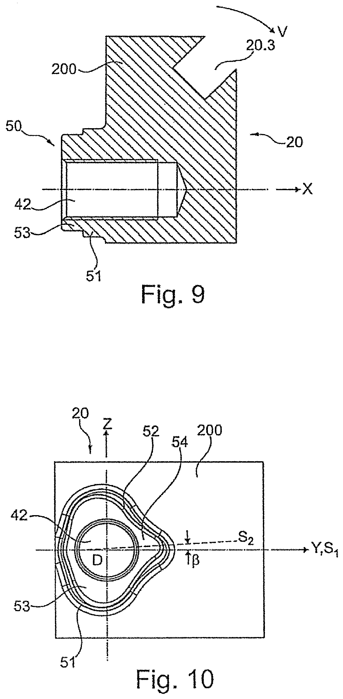

Figuren 9 und 10 zeigen ein weiteres Ausführungsbeispiel eines erfindungsgemäßen Werkzeugs 20 zur Montage in einen Werkzeughalter 30 in einem Vertikalschnitt (Fig. 9) und in Ansicht von hinten (in Draufsicht auf das Passelement 50) (Fig. 10). Bei diesem Werkzeug 20 ist die Schneidelement-Aufnahme 20.3 in Form einer Ausnahme schräg in den Werkzeugkörper 200 eingelassen. Das Werkzeug 20 ist dabei relativ breit (in z-Richtung, siehe Fig. 10) ausgeführt, so dass es vorgesehen sein kann, mehrere Schneidelemente 20.1 (hier nicht gezeigt) nebeneinander in die Schneidelement-Aufnahme 20.3 einzusetzen. Die Schneidelemente 20.1 sind dabei aus einem Hartmetall-Werkstoff gefertigt. Weitere Hartmetall-Elemente können insbesondere zum Schutz des Werkzeugs 20 vor Verschleiß an dem Werkzeugkörper 200 vorgesehen sein, beispielsweise in Vorschubrichtung V weisend, und/oder an den Seitenflächen des Werkzeugkörpers 200.

Fig. 10 lässt die Formbereiche 51, 53 mit ihren Konturbereichen und deren Ausrichtung zueinander bezüglich der y-z-Richtungen (rechtwinklig zum Höhenverlauf bzw. zur x-Richtung) genauer erkennen. Der Konturbereich des zweiten Formbereichs 53 ist dabei im Wesentlichen geometrisch ähnlich zum Konturbereich des erste Formbereichs 51 ausgebildet, d.h. er lässt sich durch Verschiebung, Drehung und/oder Stauchung/Streckung in dessen Form überführen, wobei er hier eine kleinere Fläche besitzt. Die Konturbereiche weisen jeweils Symmetrie zu ihren Symmetrieachsen S1, S2 auf. Zur Beschreibung der Ausrichtung der Konturbereiche bezüglich der y-z-Richtungen zueinander sind die Symmetrieachsen S1, S2 als Bezugsachsen gewählt, wobei die Symmetrieachse S2 gegenüber der Symmetrieachse S1 um einen Winkel β um eine Drehachse D gedreht ist. Der Winkel β kann dabei beispielsweise 4° betragen. Die Drehachse D wird hier durch die Mittellängsachse des Querschnitts der Bohrung 42 gebildet, die entlang der x-Achse verläuft. Durch die verdrehte Ausrichtung der Konturbereiche bezüglich der y-z-Richtungen zueinander lassen sich zusätzlich zu den vielfältigen Kodierungsmöglichkeiten über die Höhenrichtung (x-Richtung) weitere Kodierungsmöglichkeiten in y- bzw. z-Richtung hinzufügen, die kombiniert werden können. So lässt sich eine definierte Schnittstellenkodierung zwischen dem Werkzeug 20 und dem Werkzeughalter 30 in drei Raumrichtungen erstellen, wobei auch eine Verspannung gegen Torsion bei unterschiedlichen Drehwinkeln von Werkzeug 20 und Werkzeughalter 30 erreichbar ist.

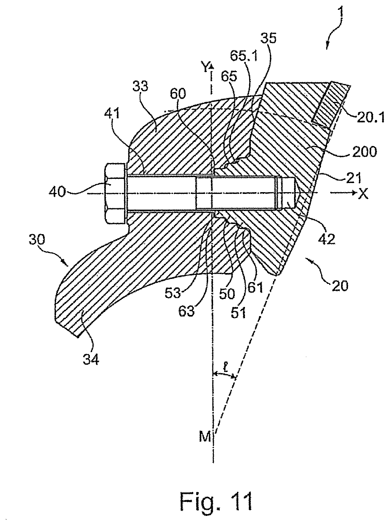

Fig. 11 zeigt eine weitere Ausführungsvariante des montierten Werkzeugsystems 1 im Vertikalschnitt. Das Werkzeugsystem 1 entspricht dabei dem Werkzeugsystem 1 gemäß Fig. 2, ausgenommen der Ausgestaltungen des Passelements 50 und des Gegenelements 60. Dabei ist bei dem Gegenelement 60 ein Rücksprung vorgesehen, der einen zusätzlichen Zwischenformbereich 65 bildet, sodass sich im Vertikalschnitt ein stufenartiges Erscheinungsbild mit drei Stufen ergibt. Das Passelement 50 dagegen meist weiterhin, mit den beiden Formbereichen 51, 53, ein 2-stufiges Erscheinungsbild im Vertikalschnitt auf. Der Formbereich 51 ist dabei weiterhin korrespondierend zu dem Gegenformbereich 61 und der Formbereich 53 korrespondierend zu dem Gegenformbereich 63 ausgebildet. Da für den Zwischenformbereich 65 kein korrespondierender der Formbereich des Passelements vorgesehen ist, bildet dieser einen zumindest teilweise umlaufenden Spalt 65.1. Der umlaufende Spalt 65.1 kann dabei vorzugsweise über eine kanalartige Ausnehmung durch das Werkzeug 20 und/oder durch den Werkzeughalter 30 von außen zugänglich sein (hier nicht gezeigt). Zur Demontage kann durch die Ausnehmung dann ein Fluid in den Bereich zwischen dem Passelement 50 und dem Gegenelement 60 zugeführt werden, der von dem umlaufenden Spalt 65.1 gebildet wird. Durch das Fluid kann dann das Werkzeug 20, nach Lösen des Befestigungsmittels 40, aus der Verbindung mit dem Werkzeughalter 30 herausgedrückt werden. Denkbar ist auch, das während des Betriebs ein Fluid zu Kühlungszwecken zugeführt wird.

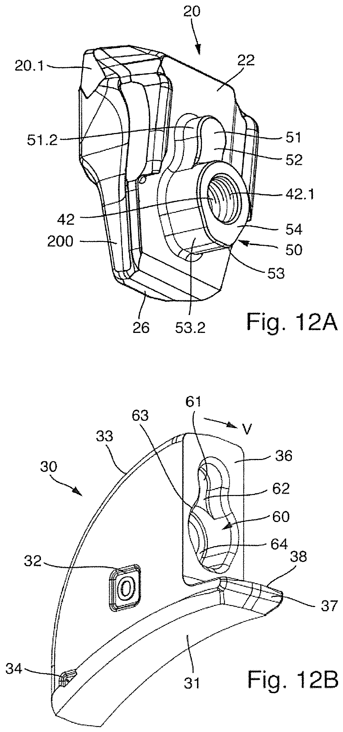

In den Figuren 12 A und 12 B ist ein weiteres erfindungsgemäßes Werkzeugsystem 1 mit dem Werkzeug 20 (Fig. 12 A) und dem Werkzeughalter 30 (Fig. 12 B) in demontiertem Zustand in perspektivischer Ansicht dargestellt. Zu beachten ist, dass das Werkzeug 20 im Vergleich zu dem Werkzeughalter 30 vergrößert dargestellt ist. Das Passelement 50 an dem Werkzeug 20 weist dabei einen ersten Formbereich 51 mit einem in etwa tropfenförmigen Konturbereich auf. Der zweite Formbereich 53 mit einem in etwa runden Konturbereich ist dabei in der Weise auf dem ersten Formbereich 51 positioniert, dass die Kontur, also der Außenumriss, des zweiten Formbereichs 53 bei Draufsicht auf das Passelement 50 bereichsweise auf der Kontur des ersten Formbereichs 51 liegt. Das Gegenelement 60 ist korrespondierend ausgeführt.

In dem Ausführungsbeispiel weist der Werkzeughalter 30 an seinem Innenbereich 34 einen in Werkzeugvorschubrichtung V weisenden Überstand 37 auf. Auf diese Weise bildet der Überstand 37 eine im Wesentlichen rechtwinklig zur Gegenfläche 36 ausgerichtete Bodenfläche 38, wobei auch ein anderer Ausrichtungswinkel denkbar wäre. Die Bodenfläche 38 steht in montiertem Zustand in Kontakt mit einem Bodenbereich 26 des Werkzeugs 20. Die Bodenfläche 38 bietet dabei beispielsweise zusätzliche Vorteile bezüglich einer einfachen Montage und/oder kann als, gegebenenfalls weitere, Stützfläche zur Aufnahme von Kräften wirken.

In den gezeigten wie auch in anderen Ausführungsformen des Werkzeugs 20 könnte weiterhin ein zusätzliches Hartmetall-Element, insbesondere ein Hartmetall-Stift, mit einer Notlaufeigenschaft in den Werkzeugkörper 200 eingebracht sein. Das Hartmetall-Element ragt vorzugsweise in den Kopfbereich 25 des Werkzeugs 20 und über den Außenbereich 33 des Werkzeughalters 30 hinaus. Bei einem starken Materialverschleiß im Kopfbereich 25 gelangt das Hartmetall-Element nun durch den Materialabtrag an die Oberfläche und bildet dort einen Schutz gegen weiteren Verschleiß des Werkzeugs 20. Auch bei Verlust des Schneidelements 20 könnte das Hartmetall-Element eine Notlaufeigenschaft erfüllen, indem es einem übermäßigen Materialabtrag an dem Werkzeugkörper 200 entgegenwirken.

Neben den in den Ausführungsbeispielen gezeigten Werkzeugen 20 bzw. Werkzeughaltern 30 ist die Kodierung auch bei anders ausgestalteten Werkzeugsystemen 1 einsetzbar. So können beispielsweise an dem Werkzeughalter 30 und/oder an dem Werkzeug 20 weitere korrespondierende Stützflächen vorgesehen sein, beispielsweise auch unten, in Richtung Werkzeugmaschine weisend, oder an den Seitenflächen, zum Beispiel durch seitliche Laschen. Auch können, wie bereits erwähnt, weitere Hartmetall-Elemente an dem Werkzeug 20 und/oder an dem Werkzeughalter 30 vorgesehen sein, die, ebenso wie das Schneidelement 20.1, wechselbar sein können. Weiterhin könnte die Kodierung auch bei Werkzeugsystemen 1 vorgesehen sein, die nicht als Wechselsystem ausgebildet sind, sondern wobei das Werkzeug 20 in einer ersten Montage unlösbar an den Werkzeughalter 30 befestigt wird. Durch das erfindungsgemäßen Werkzeug 20 bzw. das erfindungsgemäßen Werkzeugsystem 1 kann sichergestellt werden, dass für einen Werkzeugmaschine bzw. für eine Bearbeitungsaufgabe geeignete Werkzeuge 20 verwendet werden. So kann eine zugesicherte Zuverlässigkeit und die Betriebssicherheit der verwendeten Werkzeugmaschine gewährleistet werden.

## Patentansprüche

1. Werkzeug (20) zum Befestigen an einem Werkzeughalter (30) einer Werkzeugmaschine zum Bearbeiten von pflanzlichen und/oder mineralischen Materialien, mit einem Werkzeugkörper (200), an dem ein in Werkzeugvorschubrichtung (V) weisender Bearbeitungsansatz mit einem Schneidbereich, insbesondere mit einem Schneidelement (20.1) ausgebildet ist und an dem an einer dem Werkzeughalter (30) zugewandten Stützfläche (22) ein Passelement (50) zum Ineinandergreifen mit einem an dem Werkzeughalter (30) vorgesehenen Gegenelement (60) ausgebildet ist, wobei das Passelement (50) über seinen Höhenverlauf bezüglich der Stützfläche (22) zumindest zwei Formbereiche (51, 53) mit voneinander unterschiedlichen Konturbereichen aufweist,
**dadurch gekennzeichnet,**
**dass** die Konturbereiche bezüglich ihnen zugeordneter Bezugspunkte zueinander um eine parallel zur Höhenrichtung (x) verlaufenden Drehachse (D) um einen Winkel (ß) verdreht und/oder
in einer rechtwinklig zur Höhenrichtung (x) gerichteten Richtung versetzt zueinander angeordnet sind, wobei als Bezugspunkte Symmetrieachsen, und/oder Flächenschwerpunkte definiert sind und/oder dass die Drehachse (D) durch eine gemeinsame Flächenschwerpunktachse gebildet ist.

2. Werkzeug (20) nach Anspruch 1,
**dadurch gekennzeichnet,**
**dass** das Passelement (50) und das Gegenelement (60) am Werkzeughalter (30) zueinander komplementär zur Bildung einer form- und/oder kraftschlüssigen Verbindung ausgebildet sind.

3. Werkzeug (20) nach Anspruch 1 oder 2,
**dadurch gekennzeichnet,**
**dass** das Passelement (50) als Ansatz und das Gegenelement (60) als Eintiefung oder das Passelement (50) als Eintiefung und das Gegenelement (60) als Ansatz ausgebildet ist.

4. Werkzeug (20) nach Anspruch 3,
**dadurch gekennzeichnet,**
**dass** bei Draufsicht auf das Passelement (50) die Kontur eines zweiten; weiter von der Stützfläche (22) beabstandeten Formbereichs (53) innerhalb oder zumindest bereichsweise auf der Kontur eines ersten, näher an der Stützfläche (22) gelegenen Formbereichs (51) liegt.

5. Werkzeug (20) nach einem der Ansprüche 1 bis 4,
**dadurch gekennzeichnet,**
**dass** die Formbereiche (51, 53) über den Höhenverlauf des Passelements (50) zumindest bereichsweise über Plateauflächen (52, 54) mit vorzugsweise im Wesentlichen rechtwinkliger Ausrichtung zur Höhenrichtung (x), abgeschlossen sind und/oder in den nächsten Formbereich (51, 53) übergehen.

6. Werkzeug (20) nach einem der Ansprüche 1 bis 5,
**dadurch gekennzeichnet,**
**dass** die Formbereiche (51, 53) unterschiedliche Höhen (H₁, H₂) aufweisen.

7. Werkzeug (20) nach Anspruch 6,
**dadurch gekennzeichnet,**
**dass** die Formbereiche (51, 53) über ihre Höhen (H₁, H₂) von Randflächen (51.2, 53.2) eingefasst sind, die zur Höhenrichtung (x) des Passelements (50) zumindest bereichsweise parallel und/oder konisch gegen eine Abschlussfläche des Passelements (50) zulaufend ausgerichtet sind.

8. Werkzeug (20) nach einem der Ansprüche 1 bis 7,
**dadurch gekennzeichnet,**
**dass** die Kontur der Formbereiche (51, 53) zumindest bereichsweise polygonal und/oder gebogen ausgebildet ist.

9. Werkzeug (20) nach einem der Ansprüche 1 bis 8,
**dadurch gekennzeichnet,**
**dass** die Konturbereiche der Formbereiche (51, 53) jeweils symmetrisch und/oder zueinander geometrisch ähnlich ausgebildet sind.

10. Werkzeug (20) nach einem der Ansprüche 1 bis 9,
**dadurch gekennzeichnet,**
**dass** durch das Passelement (50) zumindest eine Bohrung (42) zur Aufnahme eines Befestigungsmittels (40) verläuft, deren Längsachse insbesondere in Höhenrichtung (x) ausgerichtet ist.

11. Werkzeug (20) nach einem der Ansprüche 1 bis 10,
**dadurch gekennzeichnet,**
**dass** eine Ausnehmung von außen zu dem Bereich zwischen dem Passelement (50) und dem Gegenelement (60) geführt ist.

12. Werkzeug (20) nach Anspruch 11,
**dadurch gekennzeichnet,**
**dass** durch die Ausnehmung ein Fluid einleitbar ist und/oder die Eintiefung gegenüber dem Ansatz einen Rücksprungbereich zur Bildung eines Fluidkanals zwischen dem Ansatz und der Eintiefung aufweist, der durch die Ausnehmung zugänglich ist.

13. Werkzeug (20) nach Anspruch 11 oder 12,
**dadurch gekennzeichnet,**
**dass** die Ausnehmung ausgestaltet ist, um ein Demontageelement aufzunehmen oder dass ist der Ausnehmung ein Demontageelement angeordnet ist.

14. Werkzeug (20) nach Anspruch einem der Ansprüche 11 bis 13,
**dadurch gekennzeichnet,**
**dass** durch die Ausnehmung ein Befestigungselement zur Verbindung des Werkzeugs (20) mit dem Werkzeughalter (30) einbringbar ist.

15. Werkzeug (20) nach einem der Ansprüche 1 bis 14,
**dadurch gekennzeichnet,**
**dass** zwischen miteinander in Kontakt stehenden Oberflächen des Werkzeugs (20) und des Werkzeughalters (30) ein Zwischenelement, insbesondere ein plattenförmiges Element, angeordnet ist.

16. Werkzeug (20) nach einem der Ansprüche 1 bis 15,
**dadurch gekennzeichnet,**
**dass** zwischen miteinander in Kontakt stehenden Oberflächen des Werkzeugs (20) und des Werkzeughalters (30) ein Spannelement angeordnet ist.

17. Werkzeug (20) nach einem der Ansprüche 1 bis 16,
**dadurch gekennzeichnet,**
**dass** die in montiertem Zustand miteinander in Kontakt stehenden Oberflächen von Werkzeug (20) und der Werkzeughalter (30) eine oder mehrere Ausnehmung/en und/oder Erhebung/en aufweisen.

18. Werkzeugsystem (1) mit einem Werkzeug nach mindestens einem der vorhergehenden Ansprüche und einem Werkzeughalter (30) einer Werkzeugmaschine zum Bearbeiten von pflanzlichen und/oder mineralischen Materialien.

19. Werkzeugsystem (1) nach Anspruch 18,
**dadurch gekennzeichnet,**
**dass** der Flächenschwerpunkt des Querschnitts zumindest einer Ausnehmung (41) zur Aufnahme des Passelements (50) von zumindest einem Flächenschwerpunkt des Querschnitts wenigstens eines Konturbereichs um einen Abstand (A) abweicht.

20. Werkzeugsystem (1) nach Anspruch 19,
**dadurch gekennzeichnet,**
**dass** die Projektion des Flächenschwerpunkts der Querschnittsfläche der Ausnehmung (41) in die Ebene der Stützfläche, innerhalb der Stützfläche (22) liegt.

## Claims

1. A tool (20) for fastening to a tool holder (30) of a machine tool for processing plant and/or mineral materials, comprising a tool body (200) on which a machining attachment pointing in the tool advance direction (V) and having a cutting area, in particular a cutting element (20.1), is formed, and on which a fitting element (50) is formed on a support surface (22) facing the tool holder (30) for engagement with a counter-element (60) provided on the tool holder (30),
wherein the fitting element (50) has, over its vertical profile with respect to the support surface (22), at least two moulded regions (51, 53) having mutually different contour regions,
**characterised in that**
the contour regions are rotated with respect to one another, relative to reference points assigned to them, by an angle (β) about an axis of rotation (D) running in parallel with the vertical direction (x) and/or
are arranged offset from one another in a direction perpendicular to the vertical direction (x), wherein symmetry axes and/or centroids are defined as reference points and/or **in that** the axis of rotation (D) is formed by a common centroid axis.

2. The tool (20) according to claim 1,
**characterised in that**
the fitting element (50) and the counter-element (60) on the tool holder (30) are designed to be complementary to one another in order to form a positive and/or non-positive connection.

3. The tool (20) according to claim 1 or 2,
**characterised in that**
the fitting element (50) is designed as an attachment and the counter-element (60) as a depression, or the fitting element (50) is designed as a depression and the counter-element (60) as an attachment.

4. The tool (20) according to claim 3,
**characterised in that**
in a plan view of the fitting element (50), the contour of a second moulded region (53) spaced further from the support surface (22) is located within, or at least in some regions on, the contour of a first moulded region (51) located closer to the support surface (22).

5. The tool (20) according to one of claims 1 to 4,
**characterised in that**
the moulded regions (51, 53) are terminated over the vertical profile of the fitting element (50) at least in some regions by means of plateau surfaces (52, 54) having a preferably substantially perpendicular orientation to the vertical direction (x) and/or merge into the next moulded region (51, 53).

6. The tool (20) according to one of claims 1 to 5,
**characterised in that**
the moulded regions (51, 53) have different heights (H₁, H₂).

7. The tool (20) according to claim 6,
**characterised in that**
the moulded regions (51, 53) are bordered by edge surfaces (51.2, 53.2) over their heights (H₁, H₂), said edge surfaces being parallel to the vertical direction (x) of the fitting element (50) at least in some regions and/or oriented so as to conically taper towards an end surface of the fitting element (50).

8. The tool (20) according to one of claims 1 to 7,
**characterised in that**
the contour of the moulded regions (51, 53) is polygonal and/or curved at least in some regions.

9. The tool (20) according to one of claims 1 to 8,
**characterised in that**
the contour regions of the moulded regions (51, 53) are symmetrical and/or geometrically similar to each other.

10. The tool (20) according to one of claims 1 to 9,
**characterised in that**
at least one borehole (42) for receiving a fastening means (40) extends through the fitting element (50), the longitudinal axis of said fastening means being oriented in particular in the vertical direction (x).

11. The tool (20) according to one of claims 1 to 10,
**characterised in that**
a recess is guided from the outside to the region between the fitting element (50) and the counter-element (60).

12. The tool (20) according to claim 11,
**characterised in that**
a fluid can be introduced through the recess and/or
the depression opposite the attachment has a setback area for forming a fluid channel between the attachment and the depression, which area is accessible through the recess.

13. The tool (20) according to claim 11 or 12,
**characterised in that**
the recess is designed to receive a disassembly element or **in that** a disassembly element is arranged on the recess.

14. The tool (20) according to one of claims 11 to 13,
**characterised in that**
a fastening element for connecting the tool (20) to the tool holder (30) can be introduced through the recess.

15. The tool (20) according to one of claims 1 to 14,
**characterised in that**
an intermediate element, in particular a plate-shaped element, is arranged between surfaces of the tool (20) and the tool holder (30) that are in contact with one another.

16. The tool (20) according to one of claims 1 to 15,
**characterised in that**
a clamping element is arranged between surfaces of the tool (20) and the tool holder (30) that are in contact with one another.

17. The tool (20) according to one of claims 1 to 16,
**characterised in that**
the surfaces of the tool (20) and the tool holder (30) which are in contact with one another in the assembled state have one or more recesses and/or elevations.

18. A tool system (1) having a tool according to at least one of the preceding claims and a tool holder (30) of a machine tool for processing plant and/or mineral materials.

19. The tool system (1) according to claim 18,
**characterised in that**
the centroid of the cross section of at least one recess (41) for receiving the fitting element (50) deviates from at least one centroid of the cross section of at least one contour region by a distance (A).

20. The tool system (1) according to claim 19,
**characterised in that**
the projection of the centroid of the cross-sectional area of the recess (41) into the plane of the support surface lies within the support surface (22).

## Revendications

1. Outil (20) à fixer sur un porte-outil (30) d'une machine-outil pour le traitement de matières végétales et/ou minérales, comprenant un corps d'outil (200) sur lequel un embout de traitement dirigé dans la direction d'avance d'outil (V) est constitué d'une zone de coupe, en particulier d'un élément de coupe (20.1) et sur lequel est formé, sur une surface de support (22) orientée vers le porte-outil (30), un élément d'ajustement (50) destiné à venir en prise avec un élément complémentaire (60) prévu sur le porte-outil (30),
l'élément d'ajustement (50) présentant sur sa hauteur par rapport à la surface de support (22), au moins deux zones moulées (51, 53) ayant des zones de contour différentes les unes des autres,
**caractérisé en ce que**
les zones de contour sont déplacées l'une par rapport à l'autre par rapport à des points de référence leur étant associés, d'un angle (β) autour d'un axe de rotation (D) parallèle au sens de la hauteur (x) et/ou
sont décalées l'une par rapport à l'autre dans une direction perpendiculaire au sens de la hauteur (x), en tant que points de référence étant définis des axes de symétrie et/ou des centres de gravité de surface et/ou **en ce que** l'axe de rotation (D) est formé par un axe de centre de gravité de surface commun.

2. Outil (20) selon la revendication 1,
**caractérisé en ce que**
l'élément d'ajustement (50) et l'élément complémentaire (60) sur le porte-outil (30) sont conçus pour être complémentaires l'un de l'autre afin de former une liaison par complémentarité de forme et/ou à force.

3. Outil (20) selon la revendication 1 ou 2,
**caractérisé en ce que**
l'élément d'ajustement (50) est conçu en tant qu'embout et l'élément complémentaire (60) en tant que renfoncement ou l'élément d'ajustement (50) en tant que renfoncement et l'élément complémentaire (60) en tant qu'embout.

4. Outil (20) selon la revendication 3,
**caractérisé en ce que**
en vue de dessus sur l'élément d'ajustement (50), le contour d'une seconde zone moulée (53) plus éloignée de la surface de support (22) se trouve à l'intérieur ou au moins à certains endroits sur le contour d'une première zone moulée (51) plus proche de la surface de support (22).

5. Outil (20) selon une des revendications 1 à 4,
**caractérisé en ce que**
les régions moulées (51, 53) sur la hauteur de l'élément d'ajustement (50) sont fermées au moins à certains endroits sur des surfaces de plateau (52, 54) dans une orientation de préférence sensiblement perpendiculaire au sens de la hauteur (x) et/ou se prolongent dans la zone moulée suivante (51, 53).

6. Outil (20) selon une des revendications 1 à 5,
**caractérisé en ce que**
les zones moulées (51, 53) ont des hauteurs différentes (H₁, H₂).

7. Outil (20) selon la revendication 6,
**caractérisé en ce que**
les zones moulées (51, 53) sont bordées sur leurs hauteurs (H₁, H₂) par des surfaces marginales (51.2, 53.2) qui sont parallèles et/ou se terminent en cône, par rapport au sens de la hauteur (x) de l'élément d'ajustement (50) au moins à certains endroits, contre une surface de fermeture de l'élément d'ajustement (50).

8. Outil (20) selon une des revendications 1 à 7,
**caractérisé en ce que**
le contour des zones moulées (51, 53) est au moins à certains endroits polygonal et/ou incurvé.

9. Outil (20) selon une des revendications 1 à 8,
**caractérisé en ce que**
les zones de contour des zones moulées (51, 53) sont respectivement symétriques et/ou géométriquement similaires.

10. Outil (20) selon une des revendications 1 à 9,
**caractérisé en ce que**
au moins un alésage (42) destiné à loger un moyen de fixation (40) traverse l'élément d'ajustement (50), dont l'axe longitudinal est orienté en particulier dans le sens de la hauteur (x).

11. Outil (20) selon une des revendications 1 à 10,
**caractérisé en ce que**
un évidement mène depuis l'extérieur à la région située entre l'élément d'ajustement (50) et l'élément complémentaire (60).

12. Outil (20) selon la revendication 11,
**caractérisé en ce que**
un fluide peut être introduit à travers l'évidement et/ou
l'évidement opposé à l'embout comporte une zone en retrait pour former un canal de fluide entre l'embout et l'évidement accessible à travers l'évidement.

13. Outil (20) selon la revendication 11 ou 12,
**caractérisé en ce que**
l'évidement est conçu pour loger un élément de démontage ou **en ce qu'**un élément de démontage est associé à l'évidement.

14. Outil (20) selon une des revendications 11 à 13,
**caractérisé en ce que**
un élément de fixation pour relier l'outil (20) au porte-outil (30) peut être introduit à travers l'évidement.

15. Outil (20) selon une des revendications 1 à 14,
**caractérisé en ce que**
un élément intermédiaire, en particulier un élément tabulaire, est disposé entre les surfaces en contact l'une avec l'autre de l'outil (20) et du porte-outil (30).

16. Outil (20) selon une des revendications 1 à 15,
**caractérisé en ce que**
un élément de serrage est disposé entre les surfaces en contact l'une avec l'autre de l'outil (20) et du porte-outil (30).

17. Outil (20) selon une des revendications 1 à 16,
**caractérisé en ce que**
les surfaces en contact l'une avec l'autre de l'outil (20) et du porte-outil (30), lorsque l'outil est monté, présentent un(e) ou plusieurs évidements et/ou protubérances.

18. Système d'outil (1) comprenant un outil selon au moins une des revendications précédentes et un porte-outil (30) d'une machine-outil pour le traitement de matières végétales et/ou minérales.

19. Système d'outil (1) selon la revendication 18,
**caractérisé en ce que**
le centre de gravité de surface de la section transversale d'au moins un évidement (41) destiné à recevoir l'élément d'ajustement (50) s'écarte d'au moins du centre de gravité de surface de la section transversale d'au moins une zone de contour d'une distance (A).

20. Système d'outil (1) selon la revendication 19,
**caractérisé en ce que**
la projection du centre de gravité de surface de la section transversale de l'évidement (41), dans le plan de la surface de support, se situe à l'intérieur de la surface de support (22).
